# EUROPÄISCHE PATENTSCHRIFT

(11) **EP 3 512 744 B1**
(45) Veröffentlichungstag und Bekanntmachung des Hinweises auf die Patenterteilung: **04.09.2024**
(21) Anmeldenummer: 17768440.4
(22) Anmeldetag: 14.09.2017
(51) Int. Cl.: B60T 8/17, B60T 8/1755, B60T 8/88, B60W 30/095

(54) **VERFAHREN UND VORRICHTUNG ZUM STEUERN EINER BEWEGUNG EINES FAHRZEUGS UND FAHRZEUGBEWEGUNGSSTEUERSYSTEM**
METHOD AND DEVICE FOR CONTROLLING A MOVEMENT OF A VEHICLE, AND VEHICLE MOVEMENT CONTROL SYSTEM
PROCÉDÉ ET DISPOSITIF PERMETTANT DE COMMANDER UN DÉPLACEMENT D'UN VÉHICULE ET SYSTÈME DE COMMANDE DE DÉPLACEMENT DE VÉHICULE

(30) Priorität: 16.09.2016 DE 102016117438
(43) Veröffentlichungstag der Anmeldung: 24.07.2019
(73) Patentinhaber: KNORR-BREMSE Systeme für Nutzfahrzeuge GmbH, 80809 München (DE)
(72) Erfinder: HECKER, Falk, 71706 Markgröningen (DE); MAYER, Jan, 71691 Freiberg am Neckar (DE); JUNDT, Oliver, 74394 Hessigheim (DE); GÜCKER, Ulrich, 71701 Schwieberdingen (DE); MUSTAPHA, Adnan, 75433 Maulbronn (DE); STEINBERGER, Jürgen, 82194 Gröbenzell (DE)
(86) Internationale Anmeldenummer: PCT/EP2017/073210
(87) Internationale Veröffentlichungsnummer: WO 2018/050785

(56) Entgegenhaltungen:
- EP-A1- 2 314 490
- DE-A1- 102005 058 628
- DE-A1- 102010 025 612
- DE-A1- 102012 014 408
- DE-A1- 102012 203 182
- DE-A1- 102012 211 901
- DE-A1- 102013 020 733
- DE-A1- 102013 213 171
- DE-A1- 102014 107 917
- DE-A1- 102014 215 244
- DE-A1- 102015 003 124

## Beschreibung

Die Erfindung betrifft ein Verfahren zum Steuern einer Bewegung eines Fahrzeugs, eine Vorrichtung zum Steuern einer Bewegung eines Fahrzeugs und ein Fahrzeugbewegungssteuersystem.

In Nutzfahrzeugen, beispielsweise Lastkraftwagen, können Fahrerassistenzsysteme verbaut sein, die insbesondere spezifische, begrenzte Funktionen übernehmen können.

Die DE 10 2015 003 124 A1 betrifft ein Verfahren zum Betreiben eines Fahrzeugs in einem automatisierten Fahrbetrieb und eine entsprechende Vorrichtung, wobei während einer Normalfunktion des automatisierten Fahrbetriebs fortlaufend eine Notfallsolltrajektorie für einen Eintritt zumindest eines vorgegebenen Fehlerereignisses ermittelt wird. Die DE 10 2012 211 901 A1 bezieht sich auf ein Verfahren zur Spurhalteunterstützung von Kraftfahrzeugen, wobei bei Ausfall des Lenksystems zur Aufrechterhaltung der Querführung zur Spurhalteunterstützung des Kraftfahrzeugs mittels eines Bremssystems gezielte Bremseingriffe vorgenommen werden. In der DE 10 2013 213 171 A1 sind ein Verfahren und eine Vorrichtung zum Betreiben eines Kraftfahrzeugs in einem automatisierten Fahrbetrieb gezeigt, bei dem eine Standardtrajektorie, die eine Fahrzeugführung gemäß der vom Fahrer vorgegebenen Zieleinstellung und der momentanen Umfeldsituation mittels einer ersten Regelungseinrichtung umsetzt, und eine Sicherheitstrajektorie ermittelt werden, die ein sicheres Anhalten des Fahrzeugs im Falle eines Notfalls in Abhängigkeit der momentanen Fahrzeugumfeldsituation mittels einer zweiten Regelungseinrichtung umsetzt. Die DE 10 2012 203182 A1 betrifft eine Sicherheitsvorrichtung für ein Kraftfahrzeug mit mindestens einer Sensoreinheit zum Erfassen der Umfeldbedingungen und zur Ausgabe von Umfelddaten, einer Auswerteeinheit zur Datenfusion der Umfelddaten und einer Auswerteeinheit zur Erkennung von Freiräumen und Objekten sowie mit mindestens einer Sensoreinheit zum Erfassen des Umweltzustandes und zur Ausgabe von Umweltzustandsdaten und einer Auswerteeinheit zur Datenfusion der Umfelddaten mit den Umweltzustandsdaten zur Bestimmung einer Reibwertindikation. Aus der DE 10 2010 025 612 A1 sind ein Verfahren und eine Vorrichtung zur Warnung eines Fahrers eines Fahrzeugs vor möglichen Kollisionen mit stationären Hindernissen bekannt. Die DE 10 2014 107 917 A1 bezieht sich auf ein Verfahren und eine Vorrichtung zum Vermeiden einer Kollision eines ein Kraftfahrzeug und einen Anhänger umfassenden Gespanns mit einem Hindernis. In der EP 2 314 490 A1 ist ein Verfahren zur Steuerung des Betriebs eines vollautomatischen, zur unabhängigen Fahrzeugführung ausgebildeten Fahrerassistenzsystems eines Kraftfahrzeugs offenbart.

Der Erfindung stellt sich die Aufgabe, ein verbessertes Verfahren zum Steuern einer Bewegung eines Fahrzeugs, eine verbesserte Vorrichtung zum Steuern einer Bewegung eines Fahrzeugs und ein verbessertes Fahrzeugbewegungssteuersystem bereitzustellen.

Erfindungsgemäß wird diese Aufgabe durch ein Verfahren zum Steuern einer Bewegung eines Fahrzeugs, durch eine Vorrichtung zum Steuern einer Bewegung eines Fahrzeugs und durch ein Fahrzeugbewegungssteuersystem mit den Merkmalen der Hauptansprüche 1, 9 und 10 gelöst. Vorteilhafte Ausgestaltungen und Weiterbildungen der Erfindung ergeben sich aus den nachfolgenden Unteransprüchen.

Gemäß Ausführungsformen der vorliegenden Erfindung kann insbesondere eine Bewegungssteuerung für Nutzfahrzeuge, bereitgestellt werden, die gegebenenfalls in Verbindung mit einem Bremssystem des Fahrzeugs insbesondere für hoch automatisiertes Fahren eine Koordination und Umsetzung einer Längsführung und Querführung des Fahrzeugs übernehmen kann. Eine Schnittstelle zum hoch automatisierten Fahren kann hierbei beispielsweise ein Fahrkorridor, in dem das Fahrzeug fahren soll, und ein Geschwindigkeitsprofil bzw. Beschleunigungsprofil sein, welches das Fahrzeug umsetzen soll. Die Bewegungssteuerung kann, insbesondere in Verbindung mit dem Bremssystem, durch Berücksichtigung von Informationen über das Fahrzeug, beispielsweise statische und dynamische Eigenschaften des Fahrzeugs, unter anderem eine Soll-Trajektorie für das Fahrzeug errechnen.

Vorteilhafterweise kann gemäß Ausführungsformen der vorliegenden Erfindung insbesondere eine komfortable und verbrauchseffiziente Umsetzung unter anderem einer solchen Soll-Trajektorie mittels der Bewegungssteuerung koordiniert und erreicht werden. In extremen Fahrdynamikbereichen kann beispielsweise eine Verkopplung zwischen Längsdynamik und Querdynamik des Fahrzeugs vorliegen. Damit Fahrerassistenzsysteme bis in diesen Bereich vordringen können, kann mittels der Bewegungssteuerung eine Möglichkeit geschaffen werden, das Zusammenspiel von Längsdynamik und Querdynamik sicher und einfach zu beherrschen. Diese Bewegungssteuerung kann in Verbindung mit einem Bremssystem realisiert sein bzw. im Bremssystem untergebracht sein. Somit können insbesondere Anforderungen des hoch automatisierten Fahrens erfüllt werden, indem eine Abstimmung von Fahrassistenzfunktionen insbesondere in fahrdynamisch kritischen Fahrsituationen erreicht werden kann. Eine Schnittstelle der Bewegungssteuerung kann beispielsweise so gestaltet sein, dass sich für darauf zugreifende Fahrerassistenzfunktionen bis zum hoch automatisierten Fahren eine einfach und zugleich sichere Stellmöglichkeit bietet. Eine Schnittstelle der Bewegungssteuerung kann insbesondere als eine Abstraktionsebene für eine Fahrdynamikregelung dienen, welche Längsführung und Querführung des Fahrzeugs unter sich vereinen und darüber liegenden Fahrerassistenzfunktionen eine einfache und zeitunkritische Ausregelung der Verkopplung zwischen Längs- und Querdynamiken ermöglichen kann.

Es wird ein Verfahren zum Steuern einer Bewegung eines Fahrzeugs vorgestellt, wobei das Fahrzeug ein Fahrzeugbewegungssteuersystem, das mindestens eine Erzeugungseinrichtung zum Erzeugen von Vorgabedaten für die Bewegung des Fahrzeugs aufweist, zumindest eine Bereitstellungseinrichtung zum Bereitstellen mindestens einer Fahrzeugeigenschaft des Fahrzeugs und zumindest ein Stellglied zum Beeinflussen der Bewegung des Fahrzeugs aufweist, wobei das Verfahren zumindest folgende Schritte aufweist:
Einlesen der Vorgabedaten von einer Schnittstelle zu der Erzeugungseinrichtung, wobei die Vorgabedaten einen Fahrkorridor und zusätzlich oder alternativ ein Geschwindigkeitsprofil für das Fahrzeug für einen Streckenabschnitt repräsentieren, und der mindestens einen Fahrzeugeigenschaft von einer Schnittstelle zu der zumindest einen Bereitstellungseinrichtung;
Bestimmen von Führungsdaten für das Fahrzeug unter Verwendung der Vorgabedaten und der Fahrzeugeigenschaften wobei die Führungsdaten zum Steuern der Bewegung des Fahrzeugs unter Einhaltung der Vorgabedaten nutzbar sind;
Ermitteln zumindest einer Stellgröße für das zumindest eine Stellglied unter Verwendung der Führungsdaten; und
Ausgeben der zumindest einen Stellgröße an eine Schnittstelle zu dem zumindest einen Stellglied.

Hierbei kann unter Steuern auch Regeln verstanden werden. Bei dem Fahrzeug handelt es sich um ein

Nutzfahrzeug, das aus Zugfahrzeug und Auflieger oder Anhänger besteht.

Das Fahrzeugbewegungssteuersystem kann die Erzeugungseinrichtung und zumindest eine weitere Einrichtung aufweisen. Der Fahrkorridor kann eine Fläche auf der Straße beschreiben, innerhalb derer das Fahrzeug bewegt werden soll. Das Fahrzeug soll zu keiner Zeit diese Fläche auch nur teilweise verlassen. In einem einfachen Fall kann der Fahrkorridor durch eine linke Fahrbahnmarkierung und eine rechte Fahrbahnmarkierung definiert sein. In komplexeren Fällen kann der Fahrkorridor durch statische und/oder dynamische Hindernisse weiter eingeschränkt sein. Der Fahrkorridor kann somit zeitabhängig sein. Gemäß einer Ausführungsform kann im Schritt des Bestimmens als Führungsdaten eine Soll-Trajektorie und zusätzlich oder alternativ ein Soll-Geschwindigkeitsprofil für das Fahrzeug unter Verwendung der Vorgabedaten und der mindestens einen Fahrzeugeigenschaft bestimmt werden. Eine solche Ausführungsform bietet den Vorteil, dass sowohl eine Querführung als auch eine Längsführung des Fahrzeugs durch das Verfahren beeinflusst bzw. gesteuert werden können.

Auch kann im Schritt des Ermittelns als die zumindest eine Stellgröße ein Lenkparameter für einen Lenkaktuator und zusätzlich oder alternativ ein Beschleunigungswert für ein Antriebssystem und zusätzlich oder alternativ ein Bremssystem des Fahrzeugs ermittelt werden. Der Lenkparameter kann geeignet sein, um bei einer Verwendung durch den Lenkaktuator die Bewegung eines Fahrzeugs in die Querrichtung zu steuern oder zu regeln. Der Lenkparameter kann einen Lenkwinkel, eine Gierrate, eine Querbeschleunigung, eine Ableitung der Gierrate, eine Lenkwinkelrate oder Kombinationen dieser Größen repräsentieren. Eine solche Ausführungsform bietet den Vorteil, dass sowohl eine Soll-Trajektorie und zusätzlich oder alternativ ein Soll-Geschwindigkeitsprofil für das Fahrzeug zuverlässig und sicher umgesetzt werden können.

Ferner können im Schritt des Einlesens weitere Vorgabedaten von einer Schnittstelle zu mindestens einer Fahrerassistenzeinrichtung, einem Fahrtdatensensor und zusätzlich oder alternativ einem Umfeldsensor des Fahrzeugs eingelesen werden. Hierbei können im Schritt des Bestimmens die Führungsdaten unter Verwendung der weiteren Vorgabedaten bestimmt werden. Der mindestens eine Fahrtdatensensor kann ausgebildet sein, um Fahrtdaten hinsichtlich einer Bewegung des Fahrzeugs bereitzustellen. Dabei kann der Fahrtdatensensor auch Teil eines Bremssystems des Fahrzeugs sein. Der mindestens eine Umfeldsensor kann ausgebildet sein, um ein Umfeld des Fahrzeugs zu erfassen. Eine solche Ausführungsform bietet den Vorteil, dass die Bewegung des Fahrzeugs entsprechend den Vorgabedaten stabilisiert werden kann, insbesondere auch bei widrigen Bedingungen. Durch eine solche Fahrzeugstabilisierung, beispielsweise auch unter Verwendung von ABS und zusätzlich oder alternativ ESP, kann der Fahrkorridors auch in fahrdynamisch kritischen Fahrsituationen eingehalten werden.

Zudem kann das Verfahren auch einen Schritt des Durchführens einer Überprüfung des Fahrzeugbewegungssteuersystems und zusätzlich oder alternativ eines Bremssystems des Fahrzeugs auf einen Fehler aufweisen. Hierbei können im Schritt des Bestimmens abhängig von einem Ergebnis der im Schritt des Durchführens durchgeführten Überprüfung Führungsdaten bestimmt werden, die zum Steuern der Bewegung des Fahrzeugs nutzbar sind, um ein Anhalten des Fahrzeugs unter Beachtung einer Fahrzeugumgebung zu bewirken. Eine solche Ausführungsform bietet den Vorteil, dass die Fahrfunktion bzw. eine sichere und kontrollierte Bewegung des Fahrzeugs zumindest für eine gewisse Mindestzeitdauer weiter ermöglicht werden kann. Bei einem solchen, "fail operational" bzw. im Fehlerfall funktionsfähig genannten Konzept ist beispielsweise eine Architektur des Bremssystems so ausgelegt, dass bei Auftritt eines Fehlers in einer beteiligten Komponente dieser erkannt und entsprechend darauf reagiert werden kann. Somit können zumindest Teile des Sicherheitskonzepts "fail operational" für Bremssystem und Lenkung realisiert werden.

Gemäß einer Ausführungsform kann das Verfahren auch einen Schritt des Feststellens von Bewegungszustandsdaten des Fahrzeugs unter Verwendung eines Sensorsignals von zumindest einem Fahrzeugsensor aufweisen. Hierbei repräsentieren die Bewegungszustandsdaten fahrzeugspezifische Werte und Grenzwerte bei der Bewegung. Ferner kann das Verfahren dabei einen Schritt des Übertragens der festgestellten Bewegungszustandsdaten an eine Schnittstelle zu mindestens einer Einrichtung des Fahrzeugbewegungssteuersystems aufweisen. Eine solche Ausführungsform bietet den Vorteil, dass eine Rückkopplung von aktuellen Zustandsdaten der Bewegung des Fahrzeugs an eine Einrichtung des Fahrzeugbewegungssteuersystems erfolgen kann und somit genaue und situativ korrekte Vorgabedaten bereitgestellt und für das Verfahren eingelesen werden können. Auch kann im Schritt des Einlesens als die Vorgabedaten mindestens eine Lenkparametervorgabe von einer Schnittstelle zu mindestens einer Fahrerassistenzeinrichtung des Fahrzeugs eingelesen werden. Zudem können im Schritt des Bestimmens die Führungsdaten unter Verwendung der mindestens einen Lenkparametervorgabe bestimmt werden. Ferner kann im Schritt des Ermittelns unter Verwendung der Führungsdaten ein kombinierter Lenkparameter als die zumindest eine Stellgröße ermittelt werden. Eine solche Ausführungsform bietet den Vorteil, dass wie durch einen Koordinator Lenkparametervorgaben von beteiligten Fahrerassistenzfunktionen anhand einer Logik zusammengefasst werden können.

Erfindungsgemäß werden im Schritt des Einlesen der Fahrzeugeigenschaften die Position eines Sattelpunktes zwischen Zugfahrzeug und Auflieger oder Anhänger, eine Achskonfiguration, eine zulässige Querbeschleunigung, eine Schwerpunktlage und eine Kippgrenze eingelesen. Insbesondere kann im Schritt des Einlesens als die mindestens eine Fahrzeugeigenschaft mindestens eine statische Eigenschaft des Fahrzeugs und zusätzlich oder alternativ mindestens eine dynamische Eigenschaft des Fahrzeugs eingelesen werden. Dabei kann mindestens eine Fahrzeugeigenschaft eine Sensorinformation von zumindest einem Fahrzeugsensor, eine Abmessung des Fahrzeugs, eine Schleppkurve des Fahrzeugs bei mehrteiliger Ausführung mit Zugfahrzeug und Auflieger oder Anhänger, eine Abmessung eines Anhängers oder Aufliegers des Fahrzeugs, einen Radstand und zusätzlich oder alternativ eine Lenkeigenschaft repräsentieren. Eine solche Ausführungsform bietet den Vorteil, dass die Bewegung des Fahrzeugs zuverlässig und genau unter Einhaltung der Vorgabedaten gesteuert werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird auch ein Fahrzeugbewegungssteuersystem für ein Fahrzeug vorgestellt, wobei das Fahrzeug zumindest eine Bereitstellungseinrichtung zum Bereitstellen mindestens einer Fahrzeugeigenschaft des Fahrzeugs und zumindest ein Stellglied zum Beeinflussen der Bewegung des Fahrzeugs aufweist,
wobei das Fahrzeugbewegungssteuersystem zumindest folgende Merkmale aufweist: eine Erzeugungseinrichtung zum Erzeugen von Vorgabedaten für die Bewegung des Fahrzeugs, und
eine Ausführungsform der vorstehend genannten Vorrichtung, wobei die Vorrichtung signalübertragungsfähig zumindest mit der Erzeugungseinrichtung verbunden ist.

In Verbindung mit dem Fahrzeugbewegungssteuersystem kann somit eine Ausführungsform der vorstehend genannten Vorrichtung vorteilhaft eingesetzt oder verwendet werden, um die Bewegung des Fahrzeugs steuern. Das Fahrzeugbewegungssteuersystem kann zumindest eine weitere Einrichtung aufweisen. Die zumindest eine weitere Einrichtung kann signalübertragungsfähig mit der Erzeugungseinrichtung und zusätzlich oder alternativ mit der Vorrichtung verbunden sein.

Ausführungsbeispiele des hier vorgestellten Ansatzes sind in den Zeichnungen dargestellt und in der nachfolgenden Beschreibung näher erläutert. Es zeigt:
- Fig. 1: eine schematische Darstellung eines Fahrzeugs mit einem Fahrzeugbewegungssteuersystem gemäß einem Ausführungsbeispiel.
- Fig. 2: ein Ablaufdiagramm eines Verfahrens zum Steuern gemäß einem Ausführungsbeispiel.
- Fig. 3: eine schematische Darstellung eines Fahrzeugbewegungssteuersystems gemäß einem Ausführungsbeispiel.
- Fig. 4: eine schematische Darstellung einer Verkehrssituation gemäß einem Ausführungsbeispiel.
- Fig. 5: eine schematische Darstellung einer Verkehrssituation gemäß einem Ausführungsbeispiel.
- Fig. 6: eine schematische Darstellung einer Verkehrssituation gemäß einem Ausführungsbeispiel.
- Fig. 7: eine schematische Darstellung einer Verkehrssituation gemäß einem Ausführungsbeispiel.
- Fig. 8: eine schematische Darstellung der ersten Teilvorrichtung der Steuervorrichtung aus Fig. 3.

Bevor nachfolgend Ausführungsbeispiele der vorliegenden Erfindung beschrieben werden, sollen zunächst kurz Hintergründe der vorliegenden Erfindung erläutert werden.

Ein Assistenzsystem zur Abstandsfolgefahrt für Fahrzeuge (ACC = Adaptive Cruise Control) unterstützt einen Fahrer nur bei einer Längsführung und ein Spurhalteassistent (LKS =Lane Keeping Support) unterstützt den Fahrer nur bei der Querführung des Fahrzeugs. Ein Notbremsassistent (AEBS = Advanced Emergency Brake System; Notbremse) hingegen warnt vor drohender Kollisionsgefahr bei Auffahrunfällen und greift durch einen Bremseingriff ein, wenn eine Fahrerreaktion ausbleibt, um die Kollision zu vermeiden. Jedoch wird die Querführung des Fahrzeugs nicht vom AEBS übernommen.

Beispielsweise ist ACC als Komfortsystem üblicherweise so ausgelegt, dass es eine Verzögerung nur bis beispielsweise 3m/s² anfordern kann. Erfordert eine Fahrsituation eine höhere Verzögerung, z. B. wenn ein vorausfahrendes Fahrzeug plötzlich sehr stark abbremst, sendet ACC eine Übernahmeaufforderung ("Take Over Request") an den Fahrer, damit dieser die Kontrolle wieder übernimmt und die stärkere Bremsung per Bremspedal anfordert. Unterlässt der Fahrer dies und droht ein Auffahrunfall, startet die AEBS-Funktion beispielsweise eine Eingriffskaskade, bestehend aus akustischer Warnung, Teil- und Vollbremsung, und wendet die Kollision ab oder schwächt zumindest ihre Folgen ab. ACC könnte in der Situation früher reagieren und erst gar keine kritische Kollisionssituation entstehen lasen, wenn ACC mehr als z. B. 3m/s² Verzögerung anfordern dürfte. Das Anfordern einer höheren Verzögerung kann je nach Straßenbelag und Witterung jedoch sicherheitskritisch sein. ABS und ESP sorgen zwar für eine Lenkbarkeit und eine Stabilisierung des Fahrzeugs, jedoch sollte der Fahrer hierbei das Fahrzeug selbst lenken, um es in der Spur bzw. auf Ausweichkurs zu halten.

Beispielsweise steuern ACC und AEBS zur Einstellung einer Längsbewegung einzeln über standardisierte Schnittstellen Motor, Getriebe und Bremssystem an, die beispielsweise lokal eine Koordination von Anforderungen bzw. eine Arbitrierung anhand einer prioritätsgesteuerten Logik übernehmen. LKS gibt über eine proprietäre Schnittstelle einem Lenksteller einen Sollwinkel für das Lenkrad vor. Umfänge und Arbeitsbereiche vieler bekannter Assistenzfunktionen sind insbesondere so gewählt, dass sie sich voneinander abgrenzen und dass bei ihrem Einwirken eine geringe Kopplung zwischen Längs- und Querdynamik entsteht. Eine Abstimmung solcher Fahrerassistenzsysteme aufeinander und deren Absicherung können gemäß Ausführungsbeispielen der vorliegenden Erfindung vereinfacht werden.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

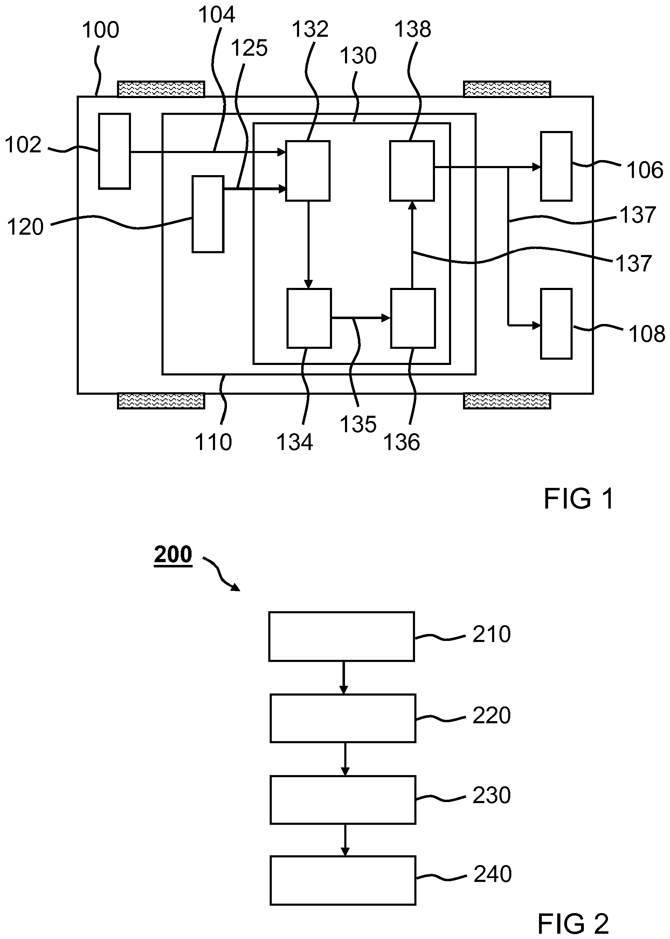

**Fig. 1** zeigt eine schematische Darstellung eines Fahrzeugs 100 mit einem Fahrzeugbewegungssteuersystem 110 gemäß einem Ausführungsbeispiel. Bei dem Fahrzeug 100 handelt es sich hierbei um ein Nutzfahrzeug, insbesondere einen Lastkraftwagen, gegebenenfalls mit Anhänger oder Auflieger. Das Fahrzeugbewegungssteuersystem 110 ist ausgebildet, um eine Bewegung des Fahrzeugs 100 zu planen, zu koordinieren und zu steuern.

Gemäß dem in Fig. 1 gezeigten Ausführungsbeispiel sind von dem Fahrzeug 100 lediglich beispielhaft eine Bereitstellungseinrichtung 102 zum Bereitstellen mindestens einer Fahrzeugeigenschaft 104 des Fahrzeugs 100 in Signalform, lediglich beispielhaft ein erstes Stellglied 106 sowie ein zweites Stellglied 108 zum Beeinflussen der Bewegung des Fahrzeugs 100 und das Fahrzeugbewegungssteuersystem 110 dargestellt.

Die Bereitstellungseinrichtung 102 weist zumindest eine Speichereinrichtung und/oder zumindest eine Sensoreinrichtung des Fahrzeugs 100 auf. Die mindestens eine Fahrzeugeigenschaft 104 repräsentiert eine Sensorinformation von zumindest einem Fahrzeugsensor, eine Abmessung des Fahrzeugs, eine Schleppkurve des Fahrzeugs bei mehrteiliger Ausführung mit Zugfahrzeug und Auflieger oder Anhänger, eine Position eines Sattelpunktes zwischen Zugfahrzeug und Auflieger oder Anhänger, eine Abmessung eines Anhängers oder Aufliegers des Fahrzeugs, eine Achskonfiguration, ein Radstand, eine zulässige Querbeschleunigung, eine Schwerpunktlage, eine Kippgrenze und/oder eine Lenkeigenschaft.

Bei dem ersten Stellglied 106 handelt es sich beispielsweise um einen Lenkaktuator, Lenkwinkelsteller oder dergleichen. Bei dem zweiten Stellglied 108 handelt es sich um eine Bremseinrichtung und/oder einen Antriebsstrang, beispielsweise einschließlich Motor und Getriebe.

Von dem Fahrzeugbewegungssteuersystem 110 sind gemäß dem in Fig. 1 dargestellten Ausführungsbeispiel eine Erzeugungseinrichtung 120 zum Erzeugen von Vorgabedaten 125 für die Bewegung des Fahrzeugs 100 und eine Steuervorrichtung 130 bzw. Vorrichtung 130 zum Steuern der Bewegung des Fahrzeugs 100 gezeigt. Die Erzeugungseinrichtung 120 und die Steuervorrichtung 130 sind signalübertragungsfähig miteinander verbunden.

Die Erzeugungseinrichtung 120 ist ausgebildet, um die Vorgabedaten 125 an die Steuervorrichtung 130 auszugeben bzw. zur Ausgabe an die Steuervorrichtung 130 bereitzustellen. Die Vorgabedaten 125 repräsentieren hierbei einen Fahrkorridor und/oder ein Geschwindigkeitsprofil für das Fahrzeug 100 insbesondere für einen zu befahrenden Streckenabschnitt. Die Vorgabedaten 125 sind mittels der Erzeugungseinrichtung 120 und gegebenenfalls weiteren Einrichtungen des Fahrzeugbewegungssteuersystems 110 generiert.

Die Steuervorrichtung 130 weist gemäß dem in Fig. 1 gezeigten Ausführungsbeispiel eine Einleseeinrichtung 132, eine Bestimmungseinrichtung 134, eine Ermittlungseinrichtung 136 und eine Ausgabeeinrichtung 138 auf. Dabei ist die Einleseeinrichtung 132 ausgebildet, um die Vorgabedaten 125 von einer Schnittstelle zu der Erzeugungseinrichtung 120 einzulesen. Ferner ist die Einleseeinrichtung 132 ausgebildet, um die mindestens eine Fahrzeugeigenschaft 104 von einer Schnittstelle zu der zumindest einen Bereitstellungseinrichtung 102 einzulesen. Zudem ist die Einleseeinrichtung 132 ausgebildet, um die Vorgabedaten 125 und die mindestens eine Fahrzeugeigenschaft 104 an die Bestimmungseinrichtung 134 weiterzuleiten.

Die Bestimmungseinrichtung 134 ist ausgebildet, um unter Verwendung der Vorgabedaten 125 und der mindestens einen Fahrzeugeigenschaft 104 dann Führungsdaten 135 für das Fahrzeug 100 zu bestimmen. Die Führungsdaten 135 sind zum Steuern der Bewegung des Fahrzeugs 100 unter Einhaltung der Vorgabedaten 125 nutzbar. Die Führungsdaten 135 repräsentieren insbesondere eine Soll-Trajektorie und/oder ein Soll-Geschwindigkeitsprofil für das Fahrzeug 100. Auch ist die Bestimmungseinrichtung 134 ausgebildet, um die bestimmten Führungsdaten 135 an die Ermittlungseinrichtung 136 weiterzuleiten.

Die Ermittlungseinrichtung 136 ist ausgebildet, um unter Verwendung der Führungsdaten 135 von der Bestimmungseinrichtung 134 zumindest eine Stellgröße 137 für die Stellglieder 106 und 108 zu ermitteln. Die zumindest eine Stellgröße repräsentiert beispielsweise einen Lenkparameter für einen Lenkaktuator und/oder einen Beschleunigungswert für ein Antriebssystem und/oder ein Bremssystem des Fahrzeugs 100. Der Lenkparameter repräsentiert insbesondere einen Lenkwinkel oder alternativ eine Gierrate, eine Querbeschleunigung, eine Ableitung der Gierrate, eine Lenkwinkelrate oder Kombinationen dieser Größen. Die Ermittlungseinrichtung ist ferner ausgebildet, um die zumindest eine Stellgröße 137 an die Ausgabeeinrichtung 138 weiterzuleiten. Die Ausgabeeinrichtung 138 ist ausgebildet, um die zumindest eine ermittelte Stellgröße 137 an eine Schnittstelle zu den Stellgliedern 106 und 108 auszugeben.

Gemäß einem Ausführungsbeispiel kann das Fahrzeugbewegungssteuersystem 110 und/oder die Steuervorrichtung 130 zumindest partiell als Teil eines Bremssystems des Fahrzeugs 100 ausgeführt sein.

**Fig. 2** zeigt ein Ablaufdiagramm eines Verfahrens 200 zum Steuern gemäß einem Ausführungsbeispiel. Das Verfahren 200 zum Steuern ist ausführbar, um eine Bewegung eines Fahrzeugs zu steuern. Dabei ist das Verfahren 200 zum Steuern ausführbar, um eine Bewegung des Fahrzeugs aus Fig. 1 oder eines ähnlichen Fahrzeugs zu steuern. Das Verfahren 200 zum Steuern ist in Verbindung mit bzw. unter Verwendung von dem Fahrzeugbewegungssteuersystem und der Steuervorrichtung aus Fig. 1 oder einem ähnlichen System bzw. einer ähnlichen Vorrichtung ausführbar.

Das Verfahren 200 zum Steuern weist einen Schritt 210 des Einlesens der Vorgabedaten von einer Schnittstelle zu der Erzeugungseinrichtung und der mindestens einen Fahrzeugeigenschaft von einer Schnittstelle zu der zumindest einen Bereitstellungseinrichtung auf. Die Vorgabedaten repräsentieren einen Fahrkorridor und/oder ein Geschwindigkeitsprofil für das Fahrzeug für einen Streckenabschnitt.

Nachfolgend werden bei dem Verfahren 200 zum Steuern in einem Schritt 220 des Bestimmens unter Verwendung der Vorgabedaten und der mindestens einen Fahrzeugeigenschaft, die im Schritt 210 des Einlesens eingelesen wurden, dann Führungsdaten für das Fahrzeug bestimmt. Die Führungsdaten sind zum Steuern der Bewegung des Fahrzeugs unter Einhaltung der Vorgabedaten nutzbar.

Es wird bei dem Verfahren 200 zum Steuern nachfolgend in einem Schritt 230 des Ermittelns unter Verwendung der im Schritt 220 des Bestimmens bestimmten Führungsdaten zumindest eine Stellgröße für das zumindest eine Stellglied bestimmt. Nachfolgend wird bei dem Verfahren 200 zum Steuern in einem Schritt 240 des Ausgebens die zumindest eine Stellgröße an eine Schnittstelle zu dem zumindest einen Stellglied ausgegeben.

Gemäß einem Ausführungsbeispiel wird im Schritt 210 des Einlesens als die mindestens eine Fahrzeugeigenschaft mindestens eine statische Eigenschaft des Fahrzeugs und/oder mindestens eine dynamische Eigenschaft des Fahrzeugs eingelesen. Auch wird gemäß einem Ausführungsbeispiel im Schritt 220 des Bestimmens unter Verwendung der Vorgabedaten und der mindestens einen Fahrzeugeigenschaft eine Soll-Trajektorie und/oder ein Soll-Geschwindigkeitsprofil für das Fahrzeug als Führungsdaten bestimmt. Ferner wird gemäß einem Ausführungsbeispiel im Schritt 230 des Ermittelns ein Lenkparameter für einen Lenkaktuator und/oder ein Beschleunigungswert für ein Antriebssystem und/oder ein Bremssystem des Fahrzeugs als die zumindest eine Stellgröße ermittelt.

Gemäß einem weiteren Ausführungsbeispiel werden im Schritt 210 des Einlesens weitere Vorgabedaten von einer Schnittstelle zu mindestens einer Fahrerassistenzeinrichtung, einem Fahrtdatensensor und/oder einem Umfeldsensor des Fahrzeugs eingelesen. Hierbei werden im Schritt 210 des Bestimmens die Führungsdaten unter Verwendung der weiteren Vorgabedaten bestimmt.

Zusätzlich oder alternativ kann im Schritt 210 des Einlesens als die Vorgabedaten mindestens eine Lenkparametervorgabe von einer Schnittstelle zu mindestens einer Fahrerassistenzeinrichtung des Fahrzeugs eingelesen werden. Im Schritt 220 des Bestimmens können die Führungsdaten unter Verwendung der mindestens einen Lenkparametervorgabe bestimmt werden. Im Schritt 230 des Ermittelns kann dann unter Verwendung der Führungsdaten ein kombinierter Lenkparameter als die zumindest eine Stellgröße ermittelt werden.

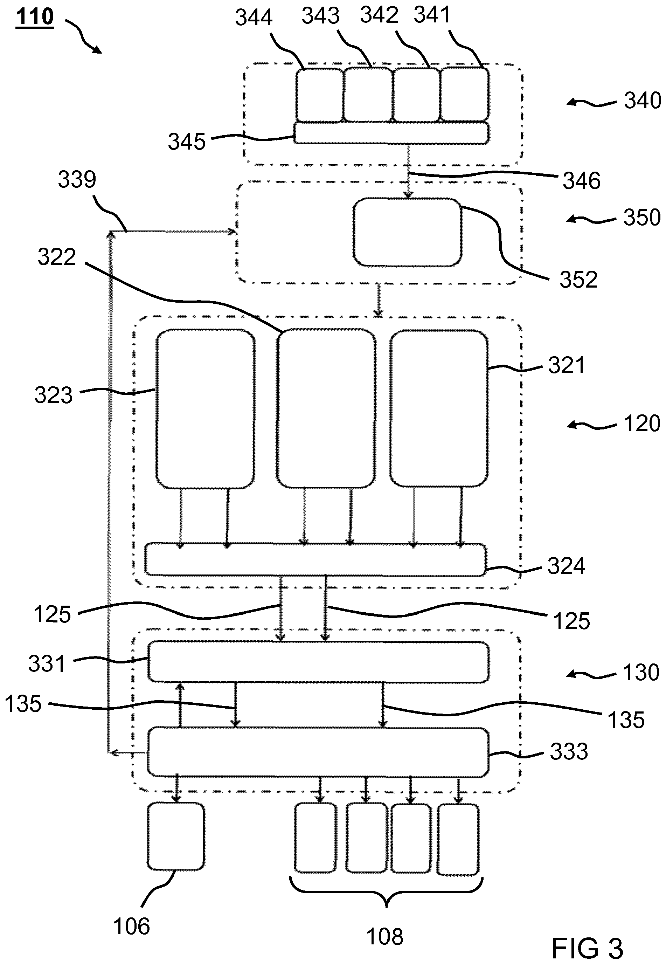

**Fig. 3** zeigt eine schematische Darstellung eines Fahrzeugbewegungssteuersystems 110 gemäß einem Ausführungsbeispiel. Hierbei entspricht oder ähnelt das Fahrzeugbewegungssteuersystem 110 dem Fahrzeugbewegungssteuersystem aus Fig. 1. Das Fahrzeugbewegungssteuersystem 110 ist ausgebildet, um Funktionen für ein hoch automatisiertes Fahren (HAD = highly automated driving) umzusetzen. Somit kann das Fahrzeugbewegungssteuersystem 110 auch als eine HAD-Architektur bezeichnet werden. Anders ausgedrückt zeigt Fig. 3 insbesondere auch eine Einbettung der Steuervorrichtung 130 bzw. eines sogenannten Motion Controllers 130 in dem Fahrzeugbewegungssteuersystem 110 bzw. in der HAD-Architektur.

In Fig. 3 ist mit dem Fahrzeugbewegungssteuersystem 110 anders ausgedrückt eine funktionale Architektur für hoch automatisiertes Fahren skizziert. Das Fahrzeugbewegungssteuersystem 110 weist gemäß dem in Fig. 3 dargestellten Ausführungsbeispiel vier Teile bzw. Module auf, die beispielsweise vier übergeordneten Verarbeitungsschritten entsprechen können.

Diese lediglich beispielhaft vier Teile des Fahrzeugbewegungssteuersystems 110 gemäß dem in Fig. 3 dargestellten Ausführungsbeispiel sind die Erzeugungseinrichtung 120 bzw. ein sogenannter Bewegungsplaner 120 (Motion Planner), die Steuervorrichtung 130 bzw. ein sogenannter Motion Controller 130, eine Fusions- und Lokalisierungseinrichtung 340 (Fusion&Localization) und eine Verhaltensplanungseinrichtung 350 bzw. ein sogenannter Verhaltensplaner 350 (Behaviour Planner).

Die Fusions- und Lokalisierungseinrichtung 340 ist ausgebildet, um verfügbare Informationen von Sensoren 341 und weiteren Quellen, wie beispielsweise einer Kommunikationseinrichtung 342, einer Einrichtung 343 für Straßenkarten und einer Einrichtung 344 für Fahrzeugpositionskoordinaten bzw. GPS-Koodinaten, mittels einer Durchführungseinrichtung 345 zum Durchführen der Fusion und Lokalisierung in einem zentralen Weltmodell 346, einer Art Datenbank, zu sammeln und dann in einer aufbereiteten Form den nachfolgenden Verarbeitungsschritten zur Verfügung zu stellen.

Als Informationsquellen können unter anderem die nachfolgend genannten genutzt werden: am Fahrzeug angebrachte Umfeld-Sensoren 341 basierend auf Radar-, Kamera-, Lidar-, Ultraschall-Sensoren oder dergleichen; Fahrervorgaben wie Gas- und Bremspedalstellung, Lenkgradwinkel und Lenkmoment; geschätzte oder berechnete Größen wie z. B. Fahrzeugbewegungszustand, Fahrzeugmasse, Achslasten, voraussichtlicher Bremsweg, Querbeschleunigungsgrenzen, Platzbedarf für ein Ausweichmanöver, wobei für diese Berechnungen Information von Sensoren 341 verwendet werden, die im Fahrzeug verbaut sind und beispielsweise über das Bremssystem des Fahrzeugs eingelesen und überwacht werden, wie beispielsweise Drehzahlfühler; Drehraten- und Beschleunigungssensoren; Fahrzeug-zu-Fahrzeug- oder Fahrzeug-zu-Infrastruktur-Kommunikation (V2V, V2I, V2X); hochgenaue Straßenkarten und GPS-Koordinaten. Für das Weltmodell 346 werden solche Informationen weiter aufbereitet. Das Weltmodell 346 liefert somit beispielsweise einen Verlauf einer eigenen Fahrspur und von benachbarten Fahrspuren, eine aktuelle Position und Orientierung des eigenen Fahrzeugs in der eigenen Fahrspur und einen verfügbaren Platz auf der Straße, in dem das eigene Fahrzeug sich bewegen kann. Hierzu können aktuelle Positionen von stehenden und dynamischen Hindernisse einfließen. Die Positionen der dynamischen Hindernisse, wie Fahrzeuge in der eigenen und in benachbarten Spuren, können auch für einen gewissen Zeithorizont prädiziert werden.

Der Verhaltensplaner 350 ist ausgebildet, um eine aktuelle Fahrstrategie festzulegen. Aus den Informationen des Weltmodells 346, beispielsweise Fahrbahnverlauf und freie Bereiche, einer Routenplanung, beispielsweise mittels eines Navigationssystem, und Kennwerten einer aktuellen Fahrzeugdynamik wird mittels einer Entscheidungseinrichtung 352 beispielsweise entschieden, ob das eigene Fahrzeug in der Fahrspur bleibt, in eine benachbarte Fahrspur wechselt oder ein Notmanöver oder sogenanntes Minimalrisikomanöver bzw. Minimal Risk Manöver ausführen soll. Hierbei sei auch auf die nachfolgenden Figuren verwiesen.

Die Steuervorrichtung 130 ist hierbei ausgebildet, um dem Verhaltensplaner 350 Bewegungszustandsdaten 339 bzw. Kennwerte 339 einer aktuellen Fahrzeugdynamik zu liefern. Die Kennwerte 339 legen die Bereiche für komfortables Fahren und fahrzeugabhängige und situationsspezifische Grenzen der Fahrphysik fest. Dazu ist die Steuervorrichtung 130 gemäß dem hier dargestellten Ausführungsbeispiel ausgebildet, um einen Schritt des Feststellens von Bewegungszustandsdaten 339 des Fahrzeugs unter Verwendung eines Sensorsignals von zumindest einem Fahrzeugsensor einen Schritt des Übertragens der festgestellten Bewegungszustandsdaten 339 an eine Schnittstelle zu dem Verhaltensplaner 350 des Fahrzeugbewegungssteuersystems 110 auszuführen.

Die Entscheidung im Verhaltensplaner 350 wird anhand einer Risikobewertung durchgeführt. Hierzu wird z. B. anhand einer Kostenfunktion für mögliche Handlungsoptionen, wie beispielsweise in der Spur bleiben, Spur wechseln, Notmanöver und Minimalrisikomanöver, ein Wert errechnet und anhand einer Entscheidungslogik eine Fahrfunktion ausgewählt, die der Erzeugungseinrichtung 120 bzw. dem Bewegungsplaner 120 übergeben wird. Darüber hinaus wird die Fahrfunktion aus den Kennwerten der aktuellen Fahrzeugdynamik parametrisiert, um eine komfortable, energieeffiziente, fahrdynamisch stabile und sichere Fahrweise zu ermöglichen.

Beispielhaft seien nachfolgend typische Fahrfunktionen für hoch automatisiertes Fahren auf Autobahnen erläutert. Hierbei wird nach Führung des Fahrzeugs in Längs- und Querrichtung unterschieden, die wie im Falle eines Spurwechselmanövers, eines Ausweichmanövers und des Minimalrisikomanöver aufeinander abgestimmt sein sollen, denn z. B. kann ein Einfädeln in fließenden Verkehr zeitkritisch sein. Eine Fahrsituation wird in Komfortfahrt und in Notsituationen unterschieden, wobei ein Übergang fließend sein kann. Fahrerassistenzfunktionen wie Tempomat bzw. Cruise Control (CC), Abstandsfolgefahrt bzw. Adaptive Cruise Control (ACC) und Notbremssystem bzw. Advanced Emergency Brake System (AEBS) werden übernommen, aber in ihrem Arbeitsbereich erweitert. So wird die ACC-Funktion, die aktuell in Serie beispielsweise lediglich bis zu 3m/s² verzögert, auf eine maximal mögliche Längsverzögerung erweitert. Dies ist möglich, da die Steuervorrichtung 130 ausgebildet ist, um dies umzusetzen. Das HAD-System sollte fortlaufend überwacht werden. Bei erkannten Fehlern ist umgehend der Fahrer zu informieren und bei Ausbleiben seiner Übernahme ist ein Minimalrisikomanöver einzuleiten, welches das Fahrzeug kollisionsfrei zum Stillstand führen soll.

Die Erzeugungseinrichtung 120 bzw. der Bewegungsplaner 120 ist ausgebildet, um für die vom Verhaltensplaner 350 geforderte Fahrfunktion unter Verwendung weiterer Informationen aus dem Weltmodell 346 über das Umfeld, wie beispielsweise Fahrbahnverlauf und freie Bereiche, als Vorgabedaten 125 einen konkreten Fahrkorridor mit einer Beschleunigungsanforderung für das Fahrzeug zu ermitteln und bereitzustellen. Die Steuervorrichtung 130 ist ausgebildet, um das Fahrzeug dann innerhalb dieses Fahrkorridors zu führen und dabei die geforderte Beschleunigung umzusetzen.

Dazu weist der Bewegungsplaner 120 eine erste Steuereinrichtung 321 zur Längs- und Quersteuerung in einer Fahrspur, beispielsweise in Verbindung mit den Funktionen Abstandsfolgefahrt, Notbremssystem, Stauassistent und Kolonnenfahrt, eine zweite Steuereinrichtung 322 zur Spurwechselsteuerung in Verbindung mit einer Längsführung und Querführung des Fahrzeugs und eine dritte Steuereinrichtung 323 für ein Minimalrisikomanöver auf. Jede der Steuereinrichtungen 321, 322 und 323 ist ausgebildet, um einen Fahrkorridor und ein Beschleunigungsprofil bzw. eine Beschleunigungsanforderung a_{x,dem} bereitzustellen. Der Fahrkorridor umfasst eine linke Begrenzung und eine rechte Begrenzung, die als Ortsfunktionen y_{l,dem}(x, tₖ) und y_{r,dem}(x, tₖ) zu einem gegebenen Zeitpunkt tₖ durch z. B. kubische Splines bzw. durch Polynome beschrieben sind. Eine Arbitriereinrichtung 324 ist ausgebildet, um durch Arbitirierung aus dem Fahrkorridor und der Beschleunigungsanforderung der Steuereinrichtungen 321, 322 und 323 die Vorgabedaten 125 zu erzeugen und an die Steuervorrichtung 130 auszugeben.

Die Steuervorrichtung 130 ist ausgebildet, um für die Vorgabedaten 125 bzw. unter anderem für den gegebenen Fahrkorridor anhand der spezifischen Fahrzeugeigenschaft Führungsdaten 135 zu bestimmen, insbesondere eine Soll-Trajektorie, entlang derer die Steuervorrichtung 130 das Fahrzeug dann führt und nötigenfalls auch stabilisierend in die Rad- und Fahrzeugdynamik eingreift, beispielsweise mittels Antiblockiersystem und elektronischem Stabilitätspaket (ABS/ESP). Dabei ist die Steuervorrichtung 130 zur Veranschaulichung in Fig. 3 lediglich beispielhaft in zwei Teile aufgeteilt: In einer ersten Teilvorrichtung 331 werden die Soll-Trajektorien generiert und deren Tracking realisiert. In einer zweiten Teilvorrichtung 333 erfolgt die Stabilisierung des Fahrzeugs.

Aus dem Fahrkorridor ermittelt die Steuervorrichtung 130 in der ersten Teilvorrichtung 331 einen Fahrschlauch, der die Einhüllende der Schleppkurven aller Punkte auf dem Fahrzeug darstellt. In der zweiten Teilvorrichtung 333 der Steuervorrichtung 130 wird das Fahrzeug innerhalb dieses Fahrschlauchs geführt und falls erforderlich stabilisiert.

Ferner sind in Fig. 3 Stellglieder 106 und 108 gezeigt, die signalübertragungsfähig mit der Steuervorrichtung 130, genauer gesagt mit der zweiten Teilvorrichtung 333 verbunden sind. Bei dem ersten Stellglied 106 handelt es sich beispielsweise um einen Lenkaktuator, wobei Beispiele für das zweite Stellglied 108 einen Motor, ein Getriebe, Verzögerungseinrichtungen, einen Anhänger und andere Einrichtungen aufweisen.

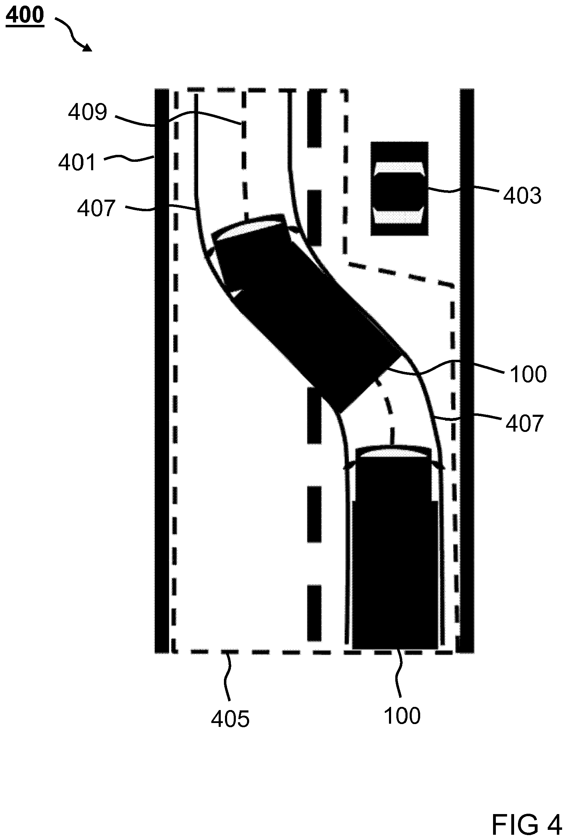

**Fig. 4** zeigt eine schematische Darstellung einer Verkehrssituation 400 gemäß einem Ausführungsbeispiel. In der Verkehrssituation 400 bewegen sich beispielsweise zwei Fahrzeuge 100 auf einer Straße 401 bzw. Fahrbahn 401. Jedes der Fahrzeuge 100 entspricht oder ähnelt dem Fahrzeug aus Fig. 1 und weist dementsprechend das Fahrzeugbewegungssteuersystem aus Fig. 1 bzw. Fig. 3 oder ein ähnliches auf. Hierbei handelt es sich bei den Fahrzeugen 100 beispielsweise um Nutzfahrzeuge mit Zugmaschine und Sattelauflieger.

Ferner ist an der Verkehrssituation 400 ein Fremdfahrzeug 403 beteiligt, welches ein Hindernis für die Fahrzeuge 100 repräsentiert. Die Fahrzeuge 100, die beispielsweise in einer Kolonnenfahrt hintereinander fahren, befinden sich bei einem Ausweichmanöver mit Spurwechsel bezüglich des Fremdfahrzeugs 403. Auf der Straße 401 ist ein verfügbarer Fahrraum 405 für die Fahrzeuge 100 eingezeichnet. Zudem ist ein Fahrkorridor 407 mit einer linken und einer rechten Begrenzung dargestellt. Der Fahrkorridor 407 repräsentiert Vorgabedaten für die Fahrzeuge 100. In der dargestellten Verkehrssituation 400 beschreibt der Fahrkorridor 407 eine Kurve zum Umfahren des Fremdfahrzeugs 403. Ferner ist im Sinne von Führungsdaten eine Trajektorie 409 bzw. ein Pfad 409 für die Fahrzeuge 100 innerhalb des Fahrkorridors 407 eingezeichnet.

Der Fahrkorridor 407 ist ausgelegt, um zu ermöglichen, dass die Steuervorrichtung 130 eine geeignete Trajektorie 409 in dem Fahrkorridor 407 bestimmt. Der Fahrkorridor 407 kann dabei so bestimmt sein, dass zumindest eine Trajektorie 409 in dem Fahrkorridor 407 anordenbar ist. Gemäß einem Ausführungsbeispiel kann sich der Fahrkorridor 407 bis auf den verfügbaren Fahrraum 405 ausdehnen.

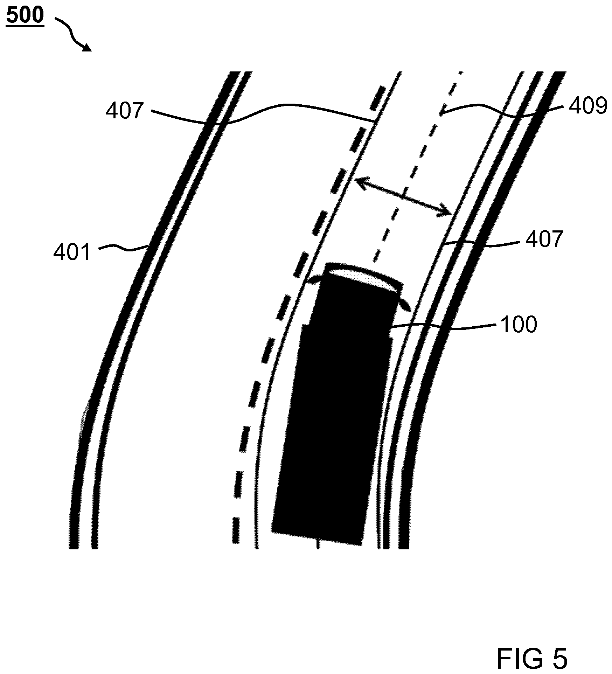

**Fig. 5** zeigt eine schematische Darstellung einer Verkehrssituation 500 gemäß einem Ausführungsbeispiel. Die Verkehrssituation 500 in Fig. 5 entspricht hierbei der Verkehrssituation aus Fig. 4 mit Ausnahme dessen, dass in der Verkehrssituation 500 lediglich ein Fahrzeug 100 auf der Straße 401 gezeigt ist, wobei das Fahrzeug 100 sich in dem Fahrkorridor 407 mit der Trajektorie 409 um eine Kurve bewegt.

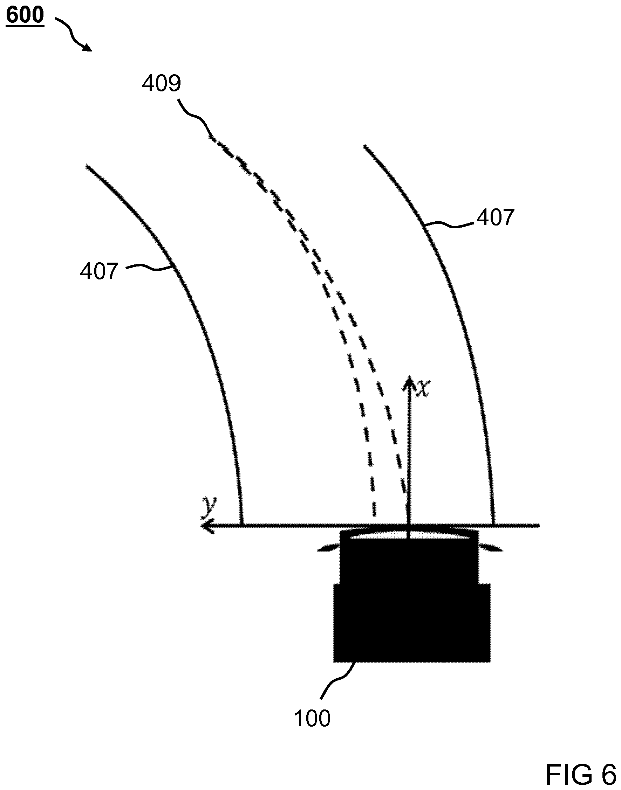

**Fig. 6** zeigt eine schematische Darstellung einer Verkehrssituation 600 gemäß einem Ausführungsbeispiel. Die Verkehrssituation 600 in Fig. 6 entspricht hierbei der Verkehrssituation aus Fig. 5 mit Ausnahme dessen, dass in der Verkehrssituation 600 lediglich das Fahrzeug 100 und der Fahrkorridor 407 mit der Trajektorie 409 bzw. Referenztrajektorie 409 gezeigt sind. Zur Veranschaulichung ist ferner mittig an einer Fahrzeugfront des Fahrzeugs 101 Ursprung eines Koordinatensystems mit Abszissenachse x und Ordinatenachse y eingezeichnet.

Der Fahrkorridor 407 weist eine linke Begrenzung und eine rechte Begrenzung auf, die als Ortsfunktionen y_{l,dem}(x, tₖ) und y_{r,dem}(x, tₖ) zu einem gegebenen Zeitpunkt tₖ bzw. bei einem aktuellen Abtastwert tₖ durch z. B. kubische Splines oder allgemeiner durch Polynome y(x) = a₀ + a₁x + a₂x² + a₃x³ beschrieben werden können. Die Referenztrajektorie 409 kann durch y_{F,dem}(x, tₖ) beschrieben werden.

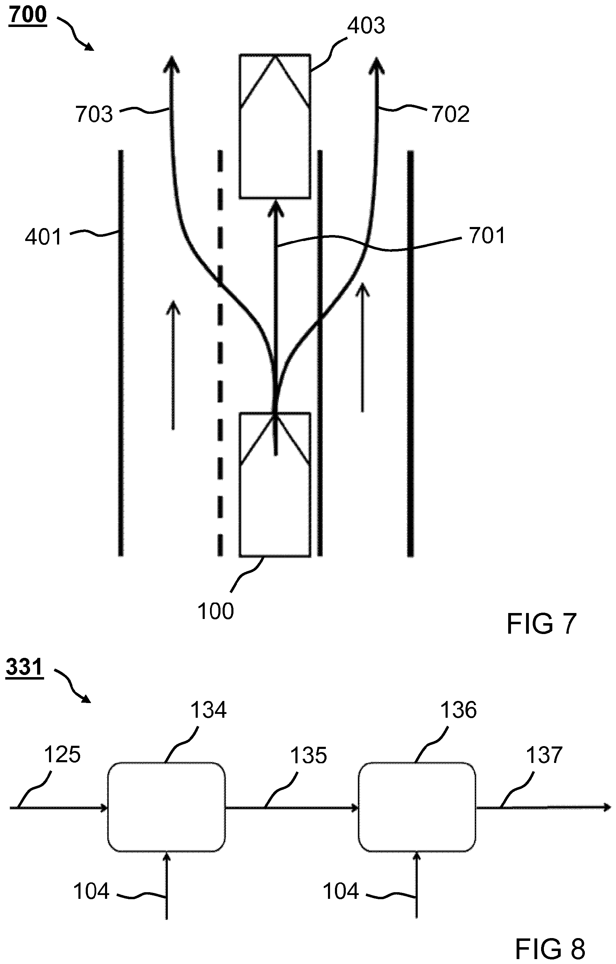

**Fig. 7** zeigt eine schematische Darstellung einer Verkehrssituation 700 gemäß einem Ausführungsbeispiel. In der Verkehrssituation 700 bewegen sich beispielsweise ein Fahrzeug 100 und ein Fremdfahrzeug 403 auf einer Straße 401 bzw. Fahrbahn 401. das Fahrzeug 100 entspricht oder ähnelt dem Fahrzeug aus Fig. 1 und weist dementsprechend das Fahrzeugbewegungssteuersystem aus Fig. 1 bzw. Fig. 3 oder ein ähnliches auf. Bei der Straße 401 handelt es sich beispielsweise um eine Autobahn mit zwei Fahrspuren und einem Standstreifen. Das Fremdfahrzeug 403 befindet sich in Fahrtrichtung vor dem Fahrzeug 100 in derselben Fahrspur wie das Fahrzeug 100.

Gängige Fahrerassistenzfunktionen können eine ständige Überwachung durch den Fahrer erfordern, der bei Fehlfunktion oder im Fehlerfall sofort übernehmen soll. Tritt ein Fehler in einem Fahrerassistenzsystem auf, besteht die Aufgabe des Fahrerassistenzsystems herkömmlicherweise darin, diesen zuverlässig zu erkennen und sich dann sicher abzuschalten ("fail silent"). Fahrerassistenzsysteme für das hoch automatisierte Fahren (z. B. Highway Pilot) sollen ermöglichen, dass der Fahrer nicht mehr das Verhalten des Fahrerassistenzsystems ständig zu überwachen braucht, sondern dass er sich auch anderen Tätigkeiten widmen kann. Nach Auftreten eines Fehlers sollte das Fahrerassistenzsystem eine gewisse Zeit sicher überbrücken können, bis der Fahrer wieder übernimmt, d. h. das Fahrzeug 100 soll automatisch gelenkt und gebremst werden können ("fail operational"). Eine Umsetzung des Sicherheitskonzepts "fail operational" für Bremse und Lenkung übernimmt hierbei die Steuervorrichtung des Fahrzeugbewegungssteuersystems des Fahrzeugs 100.

Es wird mittels des Fahrzeugbewegungssteuersystems z. B. entschieden, ob das Fahrzeug 100 in der Fahrspur bleibt, in eine benachbarte Fahrspur wechselt oder ein Notmanöver oder Minimal Risk Manöver ausführen soll. So bezeichnet ein erstes Fahrmanöver 701 in Fig. 7 ein Anhalten des Fahrzeugs 100 in der eigenen Spur in geordneter Weise, sodass rückwärtiger Verkehr reagieren kann. Ein zweites Fahrmanöver 702 repräsentiert ein Anhalten auf dem Standstreifen der Straße 401. Ein drittes Fahrmanöver 703 repräsentiert ein Ausweichen in die Nachbarspur und Bremsen bei Überwachung des rückwärtigen Verkehrs. Ein Risiko steigt hierbei vom ersten Fahrmanöver 701 über das zweite Fahrmanöver 702 bis zu dem dritten Fahrmanöver 703 an.

Hierbei ist die Steuervorrichtung des Fahrzeugbewegungssteuersystems des Fahrzeugs 100 ausgebildet, um eine Überprüfung des Fahrzeugbewegungssteuersystems und/oder eines Bremssystems des Fahrzeugs 100 auf einen Fehler durchzuführen. Ferner ist die Steuervorrichtung ausgebildet, um abhängig von einem Ergebnis der Überprüfung Führungsdaten zu bestimmen, die zum Steuern der Bewegung des Fahrzeugs 100 nutzbar sind, um ein Anhalten des Fahrzeugs 100 unter Beachtung einer Fahrzeugumgebung zu bewirken.

**Fig. 8** zeigt eine schematische Darstellung der ersten Teilvorrichtung 331 der Steuervorrichtung aus Fig. 3. Die erste Teilvorrichtung 331 entspricht oder ähnelt hierbei einem Teilabschnitt der Steuervorrichtung, wie sie in Fig. 1 gezeigt ist. Gemäß dem in Fig. 8 dargestellten Ausführungsbeispiel weist die erste Teilvorrichtung 331 der Steuervorrichtung die Bestimmungseinrichtung 134 und die Ermittlungseinrichtung 136 auf.

Eingangsdaten für die Bestimmungseinrichtung 134 sind die Vorgabedaten 125 und Fahrzeugeigenschaften 104. Die Vorgabedaten 125 repräsentieren insbesondere einen Fahrkorridor mit einer linken und einer rechten Begrenzung y_{l,dem}(x, tₖ) und y_{r,dem}(x, tₖ), wobei die Fahrzeugeigenschaften 104 eine Fahrzeuggeometrie und/oder eine Kinematik repräsentieren. Die Bestimmungseinrichtung 134 ist ausgebildet, um eine Referenztrajektorie zu berechnen, wobei ein vom Fahrzeug überstrichener Weg berücksichtigt wird. Ausgangsdaten der Bestimmungseinrichtung 134 sind die Führungsdaten 135, welche beispielsweise die Referenztrajektorie repräsentieren, die durch y_{F,dem}(x, tₖ) beschrieben ist.

Eingangsdaten für die Ermittlungseinrichtung 136 sind die Führungsdaten 135 von der Bestimmungseinrichtung 134 und Fahrzeugeigenschaften 104. Die Fahrzeugeigenschaften 104 repräsentieren dynamische Fahrzeugparameter. Die Ermittlungseinrichtung 136 ist ausgebildet, um eine inverse Fahrzeugdynamik zu berücksichtigen. Ausgangsdaten der Ermittlungseinrichtung 136 sind die zumindest eine Stellgröße 137, welche beispielsweise einen Lenkparameterbefehl (Sequenz) δ_{H,dem}(t_{k,l}) repräsentiert.

Anders ausgedrückt berücksichtigt die erste Teilvorrichtung 331 zur Generierung der Soll-Trajektorie aus dem vorgegebenen Fahrkorridor beispielsweise Informationen über Fahrzeugabmessungen (Fahrzeugbreite), eine mögliche Schleppkurve eines Zugfahrzeugs und eines Aufliegers oder Anhängers, eine Position eines Sattelpunktes (Kingpin), Abmessungen des Aufliegers, Achskonfigurationen, einen geschätzten effektiven Radstand aus dem ESP, eine maximale Querbeschleunigung (Schwerpunktlage, Kippgrenze), die aus dem ESP ermittelt ist, etc. als Fahrzeugeigenschaften 104. Nachfolgend wird unter Berücksichtigung beispielsweise der Lenkeigenschaften des Fahrzeugs zum Abfahren der Trajektorie ein SollLenkparameter berechnet. Die Lenkeigenschaften können beispielsweise aus einem im ESP vorliegenden, adaptierten Referenzmodell abgeleitet werden.

Die zweite Teilvorrichtung der Steuervorrichtung erweitert eine elektronische Bremssteuerung um Lenkfunktionen und die "fail operational" Funktionalität: nämlich um eine Fahrzeugdynamikregelung (ABS, ASR und ESP) inklusive Lenkeingriff, eine Koordinierung eines Lenkeingriffs über Lenkaktuator oder Bremsen durch Lenken (Steer-by-brake), ein Management von Aktuatoren bzw. Stellgliedern, insbesondere Lenkaktuator, eine Implementierung des Konzepts "fail operational" unter anderem für Steer-by-brake, eine Fahrzeugzustandsschätzung basierend auf Sensoren des Bremssystems, eine Berechnung fahrzeugspezifische Werte und Grenzwerte für den Verhaltensplaner, beispielsweise eine maximal mögliche Verzögerung, ein spätester Startpunkt eines Ausweichmanövers etc., ein Längsbeschleunigungsmanagement, das ein Verzögerungsmanagement auf eine Antriebsstrangsteuerung inklusive Motor und Getriebe erweitert, etc.

Unter Bezugnahme auf die vorstehend genannten Figuren können die folgenden Aufgaben der Steuervorrichtung 130 beispielhaft genannt werden. Die Steuervorrichtung 130 ist ausgebildet, um Stellgrößen für Triebstrang, Bremse, Lenkung aus einer Solltrajektorie sowie einem Geschwindigkeitsprofil zu generieren, einen Fahrzeugbewegungszustand zu ermitteln, das Fahrzeug beispielsweise mittels Antiblockiersystem, Antriebsschlupfregelung und elektronischem Stabilitätspaket (ABS, ASR, ESP) zu stabilisieren und/oder eine Bremsregelung zu realisieren.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Fahrzeug
- 102: Bereitstellungseinrichtung
- 104: Fahrzeugeigenschaft
- 106: erstes Stellglied
- 108: zweites Stellglied
- 110: Fahrzeugbewegungssteuersystem
- 120: Erzeugungseinrichtung
- 125: Vorgabedaten
- 130: Steuervorrichtung bzw. Vorrichtung zum Steuern der Bewegung des Fahrzeugs
- 132: Einleseeinrichtung
- 134: Bestimmungseinrichtung
- 135: Führungsdaten
- 136: Ermittlungseinrichtung
- 137: Stellgröße
- 138: Ausgabeeinrichtung
- 200: Verfahren zum Steuern
- 210: Schritt des Einlesens
- 220: Schritt des Bestimmens
- 230: Schritt des Ermittelns
- 240: Schritt des Ausgebens
- 321: erste Steuereinrichtung
- 322: zweite Steuereinrichtung
- 323: dritte Steuereinrichtung
- 324: Arbitriereinrichtung
- 331: erste Teilvorrichtung
- 333: zweite Teilvorrichtung
- 339: Bewegungszustandsdaten
- 340: Fusions- und Lokalisierungseinrichtung
- 341: Sensoren
- 342: Kommunikationseinrichtung
- 343: Einrichtung für Straßenkarten
- 344: Einrichtung für Fahrzeugpositionskoordinaten
- 345: Durchführungseinrichtung
- 346: Weltmodell
- 350: Verhaltensplanungseinrichtung
- 352: Entscheidungseinrichtung
- 400: Verkehrssituation
- 401: Straße
- 403: Fremdfahrzeug
- 405: verfügbarer Fahrraum
- 407: Fahrkorridor
- 409: Trajektorie bzw. Pfad
- 500: Verkehrssituation
- 600: Verkehrssituation
- 700: Verkehrssituation
- 701: erstes Fahrmanöver
- 702: zweites Fahrmanöver
- 703: drittes Fahrmanöver

## Patentansprüche

1. Verfahren (200) zum Steuern einer Bewegung eines Fahrzeugs (100), wobei das Fahrzeug (100) ein Fahrzeugbewegungssteuersystem (110), das mindestens eine Erzeugungseinrichtung (120) zum Erzeugen von Vorgabedaten (125) für die Bewegung des Fahrzeugs (100) aufweist, zumindest eine Bereitstellungseinrichtung (102) zum Bereitstellen von Fahrzeugeigenschaften (104) des Fahrzeugs (100) und zumindest ein Stellglied (106, 108) zum Beeinflussen der Bewegung des Fahrzeugs (100) aufweist, **gekennzeichnet durch**
zumindest folgende Schritte:
- Einlesen (210) der Vorgabedaten (125) von einer Schnittstelle zu der Erzeugungseinrichtung (120), wobei die Vorgabedaten (125) einen Fahrkorridor (407) und/oder ein Geschwindigkeitsprofil für das Fahrzeug (100) für einen Streckenabschnitt repräsentieren, und der Fahrzeugeigenschaften (104) von einer Schnittstelle zu der zumindest einen Bereitstellungseinrichtung (102), wobei die Fahrzeugeigenschaften (104) eine Position eines Sattelpunktes zwischen Zugfahrzeug und Auflieger oder Anhänger, eine Achskonfiguration, eine zulässige Querbeschleunigung, eine Schwerpunktlage und eine Kippgrenze repräsentieren;
- Bestimmen (220) von Führungsdaten (135) für das Fahrzeug (100) unter Verwendung der Vorgabedaten (125) und der Fahrzeugeigenschaften (104), wobei die Führungsdaten (135) zum Steuern der Bewegung des Fahrzeugs (100) unter Einhaltung der Vorgabedaten (125) nutzbar sind;
- Ermitteln (230) zumindest einer Stellgröße (137) für das zumindest eine Stellglied (106, 108) unter Verwendung der Führungsdaten (135); und
- Ausgeben (240) der zumindest einen Stellgröße (137) an eine Schnittstelle zu dem zumindest einen Stellglied (106, 108).

2. Verfahren (200) gemäß Anspruch 1,
**dadurch gekennzeichnet, dass**
im Schritt (220) des Bestimmens als Führungsdaten (135) eine Soll-Trajektorie (409) und/oder ein Soll-Geschwindigkeitsprofil für das Fahrzeug (100) unter Verwendung der Vorgabedaten (125) und der Fahrzeugeigenschaften (104) bestimmt wird.

3. Verfahren (200) gemäß einem der vorangegangenen Ansprüche,
**dadurch gekennzeichnet, dass**
im Schritt (230) des Ermittelns als die zumindest eine Stellgröße (137) ein Lenkparameter für einen Lenkaktuator (106) und/oder ein Beschleunigungswert für ein Antriebsssystem (108) und/oder ein Bremssystem (108) des Fahrzeugs (100) ermittelt wird.

4. Verfahren (200) gemäß einem der vorangegangenen Ansprüche,
**dadurch gekennzeichnet, dass**
- im Schritt (210) des Einlesens weitere Vorgabedaten von einer Schnittstelle zu mindestens einer Fahrerassistenzeinrichtung, einem Fahrtdatensensor und/oder einem Umfeldsensor des Fahrzeugs (100) eingelesen werden, und
- im Schritt (220) des Bestimmens die Führungsdaten (135) unter Verwendung der weiteren Vorgabedaten bestimmt werden.

5. Verfahren (200) gemäß einem der vorangegangenen Ansprüche,
**gekennzeichnet durch**
- einen Schritt des Durchführens einer Überprüfung des Fahrzeugbewegungssteuersystems (110) und/oder eines Bremssystems des Fahrzeugs (100) auf einen Fehler, wobei
- im Schritt (220) des Bestimmens abhängig von einem Ergebnis der im Schritt des Durchführens durchgeführten Überprüfung Führungsdaten (135) bestimmt werden, die zum Steuern der Bewegung des Fahrzeugs (100) nutzbar sind, um ein Anhalten des Fahrzeugs (100) unter Beachtung einer Fahrzeugumgebung zu bewirken.

6. Verfahren (200) gemäß einem der vorangegangenen Ansprüche,
**gekennzeichnet durch**
- einen Schritt des Feststellens von Bewegungszustandsdaten (339) des Fahrzeugs (100) unter Verwendung eines Sensorsignals von zumindest einem Fahrzeugsensor, wobei die Bewegungszustandsdaten (339) fahrzeugspezifische Werte und Grenzwerte bei der Bewegung repräsentieren; und
- einen Schritt des Übertragens der festgestellten Bewegungszustandsdaten (339) an eine Schnittstelle zu mindestens einer Einrichtung (350) des Fahrzeugbewegungssteuersystems (110).

7. Verfahren (200) gemäß einem der vorangegangenen Ansprüche,
**dadurch gekennzeichnet, dass**
- im Schritt (210) des Einlesens als die Vorgabedaten (125) mindestens eine Lenkparametervorgabe von einer Schnittstelle zu mindestens einer Fahrerassistenzeinrichtung des Fahrzeugs (100) eingelesen wird,
- im Schritt (220) des Bestimmens die Führungsdaten (135) unter Verwendung der mindestens einen Lenkparametervorgabe bestimmt werden, und
- im Schritt (230) des Ermittelns unter Verwendung der Führungsdaten (135) ein kombinierter Lenkparameter als die zumindest eine Stellgröße (137) ermittelt wird.

8. Verfahren (200) gemäß einem der vorangegangenen Ansprüche,
**dadurch gekennzeichnet, dass**
im Schritt (210) des Einlesens als die Fahrzeugeigenschaften (104) mindestens eine statische Eigenschaft des Fahrzeugs (100) und/oder mindestens eine dynamische Eigenschaft des Fahrzeugs (100) eingelesen wird, wobei die Fahrzeugeigenschaften (104) eine Sensorinformation von zumindest einem Fahrzeugsensor, eine Abmessung des Fahrzeugs (100), eine Schleppkurve des Fahrzeugs (100) bei mehrteiliger Ausführung mit Zugfahrzeug und Auflieger oder Anhänger, eine Abmessung eines Anhängers oder Aufliegers des Fahrzeugs (100), ein Radstand und/oder eine Lenkeigenschaft repräsentiert.

9. Vorrichtung (130) zum Steuern einer Bewegung eines Fahrzeugs, die eingerichtet ist, um die Schritte des Verfahrens (200) gemäß einem der vorangegangenen Ansprüche in dazu ausgebildeten Einheiten auszuführen.

10. Fahrzeugbewegungssteuersystem (110) für ein Fahrzeug (100), wobei das Fahrzeug (100) zumindest eine Bereitstellungseinrichtung (102) zum Bereitstellen von Fahrzeugeigenschaften (104) des Fahrzeugs (100) und zumindest ein Stellglied (106, 108) zum Beeinflussen der Bewegung des Fahrzeugs (100) aufweist, **gekennzeichnet durch**
zumindest folgende Merkmale:
- eine Erzeugungseinrichtung (120) zum Erzeugen von Vorgabedaten (125) für die Bewegung des Fahrzeugs (100), und
- die Vorrichtung (130) gemäß Anspruch 9, wobei die Vorrichtung (130) signalübertragungsfähig zumindest mit der Erzeugungseinrichtung (120) verbunden ist.

## Claims

1. Method (200) for controlling a movement of a vehicle (100), wherein the vehicle (100) comprises a vehicle motion control system (110), which comprises at least one generating device (120) for generating specification data (125) for the movement of the vehicle (100), at least one providing device (102) for providing vehicle characteristics (104) of the vehicle (100) and at least one actuator (106, 108) for influencing the motion of the vehicle (100), **characterized by**
at least the following steps:
- reading (210) the specification data (125) from an interface to the generating device (120), wherein the specification data (125) represents a driving corridor (407) and/or a speed profile for the vehicle (100) for a route section, and the vehicle characteristics (104) from an interface to the at least one providing device (102), wherein the vehicle characteristics (104) represent a position of a saddle point between the towing vehicle and semi-trailer or trailer, an axle configuration, a permissible lateral acceleration, a centre of gravity position and a tipping limit;
- determining (220) guidance data (135) for the vehicle (100) using the specification data (125) and the vehicle characteristics (104), wherein the guidance data (135) can be used to control the movement of the vehicle (100) in compliance with the specification data (125);
- determining (230) at least one manipulated variable (137) for the at least one actuator (106, 108) using the guidance data (135); and
outputting (240) the at least one manipulated variable (137) at an interface to the at least one actuator (106, 108).

2. Method (200) according to claim 1,
**characterized in that**
in the determination step (220), a target trajectory (409) and/or a target speed profile for the vehicle (100) is determined as guidance data (135) using the specification data (125) and the vehicle characteristics (104).

3. Method (200) according to any one of the preceding claims,
**characterized in that**
in the determination step (230) a steering parameter for a steering actuator (106) and/or an acceleration value for a drive system (108) and/or a brake system (108) of the vehicle (100) is determined as the at least one manipulated variable (137).

4. Method (200) according to any one of the preceding claims,
**characterized in that**
- in the reading step (210) further specification data are read from an interface to at least one driver assistance device, a driving data sensor and/or an environment sensor of the vehicle (100), and
- in the determination step (220), the guidance data (135) are determined using the further specification data.

5. Method (200) according to any one of the preceding claims,
**characterized by**
- a step of performing a check of the vehicle motion control system (110) and/or a braking system of the vehicle (100) for a fault, wherein
- in the determination step (220), depending on a result of the check performed in the execution step, guidance data (135) are determined, which can be used for controlling the movement of the vehicle (100), to effect a stop of the vehicle (100) in consideration of a vehicle environment.

6. Method (200) according to any one of the preceding claims,
**characterized by**
- a step of determining motion state data (339) of the vehicle (100) using a sensor signal of at least one vehicle sensor, wherein the motion state data (339) represent vehicle-specific values and limit values in the movement; and
- a step of transmitting the detected motion state data (339) at an interface to at least one device (350) of the vehicle motion control system (110).

7. Method (200) according to any one of the preceding claims,
**characterized in that**
- in the reading step (210) as the specification data (125) at least one steering parameter specification is read from an interface to at least one driver assistance device of the vehicle (100),
- in the determination step (220) the guidance data (135) is determined using the at least one steering parameter specification, and
- in the determination step (230) using the guidance data (135) a combined steering parameter is determined as the at least one manipulated variable (137).

8. Method (200) according to any one of the preceding claims,
**characterized in that**
in the reading step (210) as the vehicle characteristics (104) at least one static characteristic of the vehicle (100) and/or at least one dynamic characteristic of the vehicle (100) is read, wherein the vehicle characteristics (104) represent sensor information from at least one vehicle sensor, a dimension of the vehicle (100), a towing curve of the vehicle (100) in the case of a multipart embodiment with towing vehicle and semi-trailer or trailer, a dimension of a trailer or semi-trailer of the vehicle (100), a wheelbase and/or a steering characteristic.

9. Device (130) for controlling a movement of a vehicle, which is configured to execute the steps of the method (200) according to any one of the preceding claims in units configured for this purpose.

10. Vehicle motion control system (110) for a vehicle (100), wherein the vehicle (100) comprises at least one providing device (102) for providing vehicle characteristics (104) of the vehicle (100) and at least one actuator (106, 108) for influencing the movement of the vehicle (100),
**characterized by**
at least the following features:
- a generating device (120) for generating specification data (125) for the movement of the vehicle (100), and
- the device (130) according to claim 9, wherein the device (130) is connected at least to the generating device (120) in a signal-transmitting manner.

## Revendications

1. Procédé (200) pour commander un déplacement d'un véhicule (100), dans lequel le véhicule (100) présente un système de commande de déplacement de véhicule (110) qui présente au moins un dispositif de génération (120) pour générer des données de spécification (125) pour le déplacement du véhicule (100), au moins un dispositif de mise à disposition (102) pour mettre à disposition des propriétés de véhicule (104) du véhicule (100) et au moins un actionneur (106, 108) pour influencer le déplacement du véhicule (100), **caractérisé par**
au moins les étapes suivantes :
- lecture (210) des données de spécification (125) d'une interface vers le dispositif de génération (120), dans lequel les données de spécification (125) représentent un couloir de circulation (407) et/ou un profil de vitesse pour le véhicule (100) pour un tronçon de route, et des propriétés de véhicule (104) d'une interface avec l'au moins un dispositif de mise à disposition (102), dans lequel les propriétés de véhicule (104) représentent une position d'un col entre le véhicule tracteur et la semi-remorque ou la remorque, une configuration d'essieu, une accélération transversale admissible, une position de centre de gravité et une limite de basculement ;
- détermination (220) de données de guidage (135) pour le véhicule (100) en utilisant les données de spécification (125) et les propriétés de véhicule (104), dans lequel les données de guidage (135) peuvent être utilisées pour commander le déplacement du véhicule (100) en respectant les données de spécification (125) ;
- détermination (230) d'au moins une grandeur de réglage (137) pour l'au moins un actionneur (106, 108) en utilisant les données de guidage (135) ; et
- émission (240) de l'au moins une grandeur de réglage (137) vers une interface vers l'au moins un actionneur (106, 108).

2. Procédé (200) selon la revendication 1,
**caractérisé en ce que**
à l'étape (220) de détermination en tant que données de guidage (135), une trajectoire de consigne (409) et/ou un profil de vitesse de consigne pour le véhicule (100) est déterminé en utilisant les données de spécification (125) et les propriétés de véhicule (104).

3. Procédé (200) selon l'une quelconque des revendications précédentes, **caractérisé en ce que**
à l'étape (230) de détermination, un paramètre de direction pour un actionneur de direction (106) et/ou une valeur d'accélération pour un système d'entraînement (108) et/ou un système de freinage (108) du véhicule (100) est déterminé en tant que la au moins une grandeur de réglage (137).

4. Procédé (200) selon l'une quelconque des revendications précédentes, **caractérisé en ce que**
- à l'étape (210) de lecture, des données de spécification supplémentaires sont lues depuis une interface vers au moins un dispositif d'aide à la conduite, un capteur de données de conduite et/ou un capteur d'environnement du véhicule (100), et
- à l'étape (220) de détermination, les données de guidage (135) sont déterminées en utilisant les données de spécification supplémentaires.

5. Procédé (200) selon l'une quelconque des revendications précédentes, **caractérisé par**
- une étape de réalisation d'une vérification d'erreur du système de commande de déplacement de véhicule (110) et/ou d'un système de freinage du véhicule (100), dans lequel
- à l'étape (220) de détermination, en fonction d'un résultat de la vérification effectuée à l'étape de réalisation, des données de guidage (135) qui sont utilisables pour commander le déplacement du véhicule (100) pour provoquer un arrêt du véhicule (100) en respectant un environnement de véhicule sont déterminées.

6. Procédé (200) selon l'une quelconque des revendications précédentes, **caractérisé par**
- une étape de détection de données d'état de déplacement (339) du véhicule (100) en utilisant un signal de capteur d'au moins un capteur de véhicule, dans lequel les données d'état de déplacement (339) représentent des valeurs et des valeurs limites spécifiques au véhicule lors du déplacement ; et
- une étape de transmission des données d'état de déplacement détectées (339) à une interface vers au moins un dispositif (350) du système de commande de déplacement de véhicule (110).

7. Procédé (200) selon l'une quelconque des revendications précédentes, **caractérisé en ce que**
- à l'étape (210) de lecture, au moins une spécification de paramètre de direction depuis une interface vers au moins un dispositif d'aide à la conduite du véhicule (100) est lue en tant que données de spécification (125),
- à l'étape (220) de détermination, les données de guidage (135) sont déterminées en utilisant la au moins une spécification de paramètre de direction, et
- à l'étape (230) de détermination, un paramètre de direction combiné est déterminé en tant que la au moins une grandeur de réglage (137) en utilisant les données de guidage (135).

8. Procédé (200) selon l'une quelconque des revendications précédentes, **caractérisé en ce que**
à l'étape (210) de lecture, au moins une propriété statique du véhicule (100) et/ou au moins une propriété dynamique du véhicule (100) est lue en tant que propriétés de véhicule (104), dans lequel les propriétés de véhicule (104) représentent une information de capteur d'au moins un capteur de véhicule, une dimension du véhicule (100), une courbe de remorquage du véhicule (100) dans le cas d'une version en plusieurs parties avec véhicule tracteur et semi-remorque ou remorque, une dimension d'une remorque ou semi-remorque du véhicule (100), un empattement et/ou une propriété de direction.

9. Dispositif (130) de commande d'un déplacement d'un véhicule qui est configuré pour exécuter les étapes du procédé (200) selon l'une des revendications précédentes dans des unités conçues à cet effet.

10. Système de commande de déplacement de véhicule (110) pour un véhicule (100), dans lequel le véhicule (100) présente au moins un dispositif de mise à disposition (102) pour mettre à disposition des propriétés de véhicule (104) du véhicule (100) et au moins un actionneur (106, 108) pour influencer le déplacement du véhicule (100),
**caractérisé par**
au moins les caractéristiques suivantes :
- un dispositif de génération (120) pour générer des données de spécification (125) pour le déplacement du véhicule (100), et
- le dispositif (130) selon la revendication 9, dans lequel le dispositif (130) est connecté au moins au dispositif de génération (120) de manière à pouvoir transmettre des signaux.
